# Europäisches Patentamt
## European Patent Office
## Office européen des brevets

(19)

(11) Publication number: **0 194 667**
**B1**

(12)

# EUROPEAN PATENT SPECIFICATION

(45) Date of publication of the patent specification:
**02.08.89**

(51) Int. Cl.⁴: **A23D 3/02, A23D 5/02, B01D 9/00, A01J 15/08**

(21) Application number: **86103295.1**

(22) Date of filing: **12.03.86**

(54) Intermediate or post-crystallizer for use in combination with tubular coolers with scrapers for the crystallization of molten or emulsified fats.

(30) Priority: **14.03.85 DK 1174/85**

(43) Date of publication of application:
**17.09.86 Bulletin 86/38**

(45) Publication of the grant of the patent:
**02.08.89 Bulletin 89/31**

(84) Designated Contracting States:
**CH DE FR GB LI NL**

(56) References cited:
**DE-C- 29 212**
**GB-A- 788 183**
**US-A- 3 235 002**

(73) Proprietor: **GERSTENBERG & AGGER A/S,**
**Frydendalsvej 19, DK-1809 Frederiksberg C(DK)**

(72) Inventor: **Lange, Christian, Bjerggade 11,**
**DK-4600 Koge(DK)**

(74) Representative: **Patentanwälte Leinweber &**
**Zimmermann, Rosental 7/II Aufg.,**
**D-8000 München 2(DE)**

ACTORUM AG

## Description

The invention relates to an intermediate or post-crystallizer for use in combination with tubular coolers with scrapers for the crystallization of molten or emulsified fats, said crystallizer comprising a stationary cylinder with a shaft rotating therein, the cylinder being provided in a number of axial positions with inwardly directed rods extending to the vicinity of the surface of the shaft, the rotating shaft being provided in axial positions displaced from those previously mentioned with outwardly directed rods extending to the vicinity of the inner wall of the cylinder.

The reason for using intermediate or post-crystallizers in plants of the kind referred to is that in many cases it is not possible to obtain a satisfactory crystallization, by which a molten fat or an emulsion of a fat in water is converted to a solid, semisolid or plastic or high-viscous product, by means of tubular coolers alone. E. g. this will often be the case in the crystallizing treatment of butter, palm butter, lard, margarine and mayonnaise. In order to start the crystallization process a shock cooling in a tubular cooler is required, but if the mass is allowed to remain too long in the tubular cooler, it is likely to become under-cooled, because the formation of crystals and thereby the liberation of crystallization heat cannot keep pace with the cooling. The mass is therefore fed forward to an intermediate or post-crystallizer of the kind referred to, in which it is intended to allow the crystallization process to continue without any external influence, apart from the stirring which is required to keep the mass homogeneous and to avoid the formation of cavities. It is, however, also necessary to prevent the mass from depositing on the inner surface of the cylinder or the surface of the shaft, and in the known crystallizers the rods have therefore been arranged so close together that in their combined effect they sweep the said surfaces so to speak in their whole extension. Hereby there is a risk that the product is excessively worked, which may impede the crystallization. The effect of the crystallizer is therefore considerably less than was to be expected from its volume, and the product is likely to be excessively worked.

It is the object of the invention to remedy this drawback, and with this in view, according to the invention, the rods of the cylinder are provided at their ends with transverse rods extending along the surface of the shaft at a small distance therefrom between the axial positions of the rods of the shaft, while the rods of the shaft are similarly provided at their ends with transverse rods extending along the surface of the cylinder at a small distance therefrom between the axial positions of the rods of the cylinder and between the positions of the outermost ones of the rods of the cylinder and the end walls of the cylinder. Hereby the advantage is obtained that each of the rods cleans an area of a size corresponding to the length of the transverse rod so that the number of rods required will be much less, and the working of the product will be considerably reduced. The crystallizer therefore becomes more efficient.

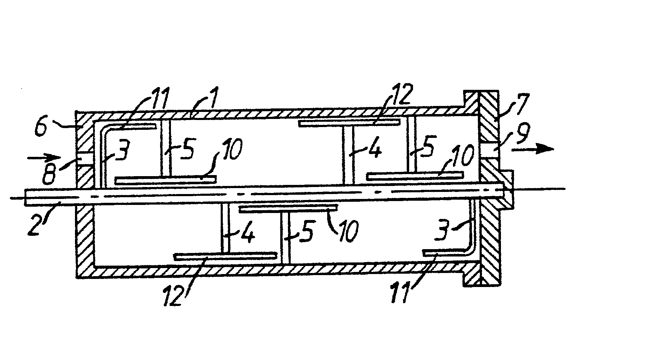

The invention will in the following be explained in further detail with reference to the drawing, which shows a longitudinal section through a crystallizer according to one embodiment of the invention with the shaft in a certain angular position relative to the cylinder.

In the drawing, 1 is a cylinder having end walls 6 and 7. In the cylinder there is mounted a shaft 2, which is coupled to a driving mechanism, not shown, by means of which the shaft is caused to rotate at low speed. The product to be crystallized is supplied through an opening 8 in the end wall 6 and is discharged through an opening 9 in the end wall 7. On the inner wall of the cylinder a number of stationary rods 5 are arranged, each of which is provided with a transverse rod 10 extending along the surface of the shaft 2 at a short distance therefrom. On the shaft 2 a number of rotating rods 3 and 4 are arranged, each being provided with a transverse rod 11 and 12, respectively. The rods 3 are located immediately adjacent the end walls 6 and 7, respectively, of the cylinder, and their transverse rods 11 extend along the inner surface of the cylinder at a short distance therefrom over a length from the end wall 6 and 7, respectively, substantially to the axial position of the next one of the stationary rods 5. The transverse rods 12 of the rods 4 extend substantially between the axial positions of two successive ones of the stationary rods 5. The transverse rods 10 of the rods 5 extend substantially between the axial positions of two successive ones of the rotating rods 3 and 4, respectively.

As will be seen, the transverse rods 10, in their combined effect, sweep the rotating surface of the shaft 2 in practically the whole of its length, while the transverse rods 11 and 12 of the rotating rods 3 and 4 sweep the inner surface of the cylinder practically in the whole of its length. Thereby the inner surface of the cylinder and the surface of the shaft are kept clean in an efficient manner by means of a very small number of rods so that it becomes possible to limit the stirring of the mass caused by the rods to exactly the minimum, which is required to keep the mass homogeneous and devoid of cavities.

## Claims

Intermediate or post-crystallizer for use in combination with tubular coolers with scrapers for the crystallization of molten or emulsified fats, said crystallizer comprising a stationary cylinder (1) with a shaft (2) rotating therein, the cylinder (1) being provided in a number of axial positions with inwardly directed rods (5) extending to the vicinity of the surface of the shaft (2), the rotating shaft (2) being provided in axial positions displaced from those previously mentioned with outwardly directed rods (3, 4) extending to the vicinity of the inner wall of the cylinder (1), **characterized** in that the rods (5) of the cylinder (1) are provided at their ends with transverse rods (10) extending along the surface of the shaft (2) at a small distance therefrom between the axial positions of the rods (3, 4) of the shaft, while the rods (3, 4) of the shaft are similarly provided at their ends with transverse rods (11, 12) extending along the surface of the cylinder at a small distance therefrom between the axial positions of the rods (5) of the cylinder and between the positions of the outermost ones of the rods (5) of the cylinder and the end walls (6, 7) of the cylinder.

## Patentansprüche

Zwischen- oder Postkristallisator für Anwendung in Kombination mit rohrförmigen Kühlern mit Schrappern zur Kristallisierung von geschmolzenen oder emulgierten Fetten, welcher Kristallisator einen festen Zylinder (1) mit einer darin umlaufenden Welle (2) umfasst, wobei der Zylinder in einer Anzahl von Axiallagen mit nach innen gerichteten Stangen (5) versehen ist, die sich bis zur Nähe der Oberfläche der Welle (2) erstrecken, und wobei ferner die umlaufende Welle in Axiallagen, die gegenüber den früher genannten Axiallagen versetzt sind, mit nach aussen gerichteten Stangen (3, 4) versehen ist, die sich bis zur Nähe der Innenwand des Zylinders (1) erstrecken, dadurch gekennzeichnet, dass die Stangen (5) des Zylinders an ihren Enden mit Querstangen (10) versehen sind, die sich zwischen den Axiallagen der Stangen (3, 4) der Welle längs der Oberfläche der Welle (2) in kleinem Abstand davon erstrecken, während die Stangen (3, 4) der Welle ähnlich an ihren Enden mit Querstangen (11, 12) versehen sind, die sich zwischen den Axiallagen der Stangen (5) des Zylinders sowie zwischen den äussersten der Stangen (5) des Zylinders und den Endwänden (6, 7) des Zylinders längs der Innenwand des Zylinders in kleinem Abstand davon erstrecken.

## Revendications

Cristalliseur intermédiaire ou post-cristalliseur utilisable en combinaison avec des refroidisseurs tubulaires à racloirs pour la cristallisation de graisses fondues ou émulsifiées, ledit cristalliseur comprenant un cylindre fixe (1) avec un arbre (2) tournant à l'intérieur, le cylindre (1) étant muni en un certain nombre de positions axiales de barres (5) dirigées vers l'intérieur s'étendant jusqu'au voisinage de la surface de l'arbre (2), l'arbre rotatif (2) étant muni en des positions axiales décalées de celles précédemment mentionnées de barres (3, 4) dirigées vers l'extérieur s'étendant jusqu'au voisinage de la paroi interne du cylindre (1), caractérisé en ce que les barres (5) du cylindre (1) sont munies à leurs extrémités de barres transversales (10) s'étendant suivant la surface de l'arbre (2) à une faible distance de celui-ci entre les positions axiales des barres (3, 4) de l'arbre, tandis que les barres (3, 4) de l'arbre sont de façon similaire munies à leurs extrémités de barres transversales (11, 12) s'étendant suivant la surface du cylindre à une faible distance de celui-ci entre les positions axiales des barres (5) du cylindre et entre les positions des plus externes des barres (5) du cylindre et les parois extrêmes (6, 7) du cylindre.